# EUROPÄISCHE PATENTSCHRIFT

(11) **EP 2 704 950 B1**
(45) Veröffentlichungstag und Bekanntmachung des Hinweises auf die Patenterteilung: **13.04.2016**
(21) Anmeldenummer: 12723099.3
(22) Anmeldetag: 24.04.2012
(51) Int. Cl.: B65B 35/18

(54) **VERFAHREN ZUM UMSETZEN EINER TUBE IN EINER TUBENFÜLLMASCHINE**
METHOD FOR TRANSFERRING A TUBE IN A TUBE FILLING MACHINE
PROCÉDÉ DE DÉPLACEMENT DESTINÉ À DÉPLACER UN TUBE DANS UNE MACHINE DE REMPLISSAGE DE TUBE

(30) Priorität: 30.04.2011 DE 102011100120
(43) Veröffentlichungstag der Anmeldung: 12.03.2014
(73) Patentinhaber: IWK Verpackungstechnik GmbH, 76297 Stutensee (DE)
(72) Erfinder: KLEIN, Stephan, 76229 Karlsruhe (DE); BEHRINGER, Thomas, 76467 Bietigheim (DE)
(74) Vertreter: Lichti - Patentanwälte Partnerschaft mbB
(86) Internationale Anmeldenummer: PCT/EP2012/001741
(87) Internationale Veröffentlichungsnummer: WO 2012/150007

(56) Entgegenhaltungen:
- WO-A1-00/69724
- DE-A1- 3 504 233
- DE-U1- 9 103 815
- US-A1- 2004 141 833
- US-B2- 7 156 219

## Beschreibung

Die Erfindung betrifft ein Verfahren zum Umsetzen einer Tube in einer Tubenfüllmaschine zwischen einem Bereitstellungsplatz und einem Ablageplatz sowie eine Umsetzvorrichtung insbesondere zur Durchführung des Verfahrens.

In einer Tubenfüllmaschine ist es an mehreren Stellen notwendig, eine leere oder auch bereits gefüllte Tube umzusetzen. Beispielsweise müssen die leeren Tuben, die in einer sogenannten endlosen Reihe bereitgestellt werden, jeweils einzeln in einen Tubenhalter eingesetzt werden, in dem sie verschiedene Arbeitsstationen der Tubenfüllmaschine durchlaufen. Die gefüllte und verschlossene Tube muss anschließend wieder aus dem Tubenhalter entnommen und auf eine Fördervorrichtung gelegt werden, mit der sie weiteren Arbeitsstationen beispielsweise einer nachgeschalteten Kartonierstation zugeführt werden.

Im Folgenden soll zunächst beispielhaft das Einsetzen einer leeren Tube in einen Tubenhalter beschrieben werden.

Die Tuben werden in quer zur Bewegungsrichtung ausgerichteter Lage in endloser Reihe zugeführt. Die 1. Tube der Reihe gelangt auf einen Bereitstellungsplatz, der von einer schalenartigen Aufnahme gebildet ist. Die Tube rutscht insbesondere infolge ihres Eigengewichts in die Aufnahme und wird dort fixiert. Anschließend schwenkt die Aufnahme mit der Tube aus einer horizontalen Ausrichtung in eine vertikale Ausrichtung, wobei die Tube gegen eine Fläche eines Ablageplatzes gespannt wird. In dieser vertikalen Ausrichtung der Tube befindet sie sich oberhalb eines Tubenhalters, in den sie dann von oben hineingeschoben bzw. hineingedrückt wird. Sobald die Tube freigegeben ist, schwenkt die schalenartige Aufnahme in ihre horizontale Ausrichtung am Bereitstellungsplatz zurück, woraufhin die nächste Tube in die schalenartige Aufnahme gelangt.

US 7156219 B2 und US 2004/141833 offenbaren Vorrichtungen und Verfahren nach dem Oberbegriff des Anspruchs 1.

Nachteilig bei dieser Ausgestaltung ist, dass die Vorrichtung relativ langsam ist, da die schalenartige Aufnahme über einen relativ langen Zeitraum von der einzusetzenden Tube belegt ist und die nächste Tube erst dann auf den Bereitstellungsplatz gelassen werden kann, wenn die schalenartige Aufnahme auf den Bereitstellungsplatz zurückgeschwenkt ist und dort ihre Aufnahmeposition eingenommen hat. Darüber hinaus müssen die Tuben der endlosen Reihe durch eine spezielle Konstruktion daran gehindert werden, auf den Bereitstellungsplatz vorzurücken, wenn die schalenartige Aufnahme sich dort nicht befindet. Dafür ist eine Sperrvorrichtung notwendig, die zunächst freigegeben werden muss, wenn die Steuerung festgestellt hat, dass sich die schalenartige Aufnahme in ihrer Sollposition am Bereitstellungsplatz befindet. Diese Konstruktion ist aufwendig und störanfällig.

Der Erfindung liegt die Aufgabe zugrunde, ein Verfahren zum Umsetzen einer Tube in einer Tubenfüllmaschine zu schaffen, mit der sich die Tuben schnell und in einfacher Weise zwischen dem Bereitstellungsplatz und dem Ablageplatz umsetzen lassen. Darüber hinaus soll eine Umsetzvorrichtung geschaffen werden, mit der sich das Verfahren in einfacher Weise ausführen lässt.

Diese Aufgabe wird hinsichtlich des Verfahrens durch die Merkmale des Anspruchs 1 gelöst. Dabei ist vorgesehen, dass die Tube auf dem Bereitstellungsplatz mittels einer Haltevorrichtung an ihrer Mantelfläche ergriffen und mittels einer Umsetzvorrichtung unter gleichzeitiger Drehung um ihre Längsachse oder eine parallel dazu verlaufende Achse zum Ablageplatz transportiert und dort abgelegt wird.

Erfindungsgemäß wird von der Grundüberlegung ausgegangen, die Tube mittels der Haltevorrichtung auf dem Bereitstellungsplatz zu ergreifen und vom Bereitstellungsplatz abzuheben und unter Schwenkung um ihre Längsachse oder um eine parallel dazu verlaufende Achse zum Ablageplatz zu transportieren. Sobald die Tube vom Bereitstellungsplatz entnommen wurde, kann dort schon die nächste Tube bereitgestellt werden.

Die Haltevorrichtung ergreift die Tube vorzugsweise in zumindest zwei in Längsrichtung der Tube beabstandeten Bereichen, wodurch eine sichere Fixierung der Tube gewährleistet ist. Vorzugsweise ist die Haltevorrichtung von mehreren Saugern gebildet, die mit der Mantelfläche der Tube in Anlage gebracht werden, woraufhin die Tube durch Aufbringung eines Unterdrucks angesaugt und sicher aufgenommen wird.

Erfindungsgemäss wird die Tube auf dem Transport zwischen dem Bereitstellungsplatz und dem Ablageplatz zusätzlich zu der Drehung um ihre Längsachse oder die dazu parallele Achse auch um eine Drehachse um beispielsweise 90° geschwenkt. Aufgrund dieser überlagerten Bewegungen kann die Tube in ihrer Bewegungsbahn optimal an den vorhandenen Bauraum einer Verpackungsmaschine angepasst werden und es ist sichergestellt, dass die Tube in gewünschter Ausrichtung auf dem Ablageplatz ankommt.

Vorzugsweise verläuft die Drehachse senkrecht zur Längsachse der Tube oder der dazu parallelen Achse.

Erfindungsgemäss ist vorgesehen, dass die Tube in einer horizontalen Ausrichtung auf dem Bereitstellungsplatz bereitliegt und aufgenommen und dann aufgerichtet und in einer vertikalen Ausrichtung auf dem Ablageplatz abgegeben wird. Dabei kann insbesondere vorgesehen sein, dass die Tube auf dem Ablageplatz oberhalb eines Tubenhalters gehalten ist und von oben in den Tubenhalter eingeschoben wird.

In bevorzugter Ausgestaltung der Erfindung ist vorgesehen, dass die Tube auf dem Ablageplatz mittels einer Saugvorrichtung gehalten ist. Sobald die Umsetzvorrichtung die Tube auf dem Ablageplatz positioniert hat, wird die Tube mittel der Saugvorrichtung auf dem Ablageplatz in vertikaler Ausrichtung gehalten. Die Haltevorrichtung kann die Tube dann bereits freigeben und zum Bereitstellungsplatz zurückkehren, um die nächste Tube aufzunehmen.

Das Aufnehmen einer Tube vom Bereitstellungsplatz erfolgt vorzugweise dadurch, dass die Haltevorrichtung bzw. die Sauger sich von oben auf die horizontal ausgerichtete Tube auflegen und somit auf die Oberseite der Tube einwirken.

In vorrichtungstechnischer Hinsicht wird die oben genannte Aufgabe durch eine Umsetzvorrichtung zum Umsetzen einer Tube in einer Tubenfüllmaschine gelöst, die einen mehrgliedrigen Gelenkarm besitzt, der zumindest ein 1. Armglied aufweist, das um eine Drehachse schwenkbar gelagert ist und mittelbar oder unmittelbar zumindest ein Halteglied schwenkbar lagert, wobei das Halteglied zumindest eine Haltevorrichtung trägt, mittels der eine Tube aufnehmbar ist und wobei das Halteglied um eine parallel zur Längsachse der Tube verlaufende oder mit dieser zusammenfallende Achse schwenkbar ist. Die Ausgestaltung der Umsetzvorrichtung als mehrgliedriger Gelenkarm stellt einerseits sicher, dass eine stabile, dauerhafte Konstruktion gegeben ist, wobei durch geeignete Verstellung und Verdrehung der Arme zueinander eine sehr gute Anpassung an die Geometrie der Tubenfüllmaschine, d.h. die relative Position des Bereitstellungsplatzes und des Ablageplatzes möglich ist.

In einer ersten, konstruktiv relativ einfachen Ausgestaltung ist lediglich ein 1. Armglied vorgesehen, das zwischen zwei Positionen hin und her geschwenkt wird. An dem 1. Armglied ist zumindest ein Halteglied gelagert, das die Haltevorrichtung für die Tuben und insbesondere die Sauger trägt. Das Halteglied ist relativ zu dem 1. Armglied so schwenkbar, dass eine Schwenkung des Halteglieds zu einer Drehung einer am Halteglied gehaltenen Tube um deren Längsachse bzw. eine parallel dazu verlaufende Achse führt.

Wenn die aufzunehmende Tube in horizontaler Ausrichtung auf dem Bereitstellungsplatz liegt, werden die Sauger des Halteglieds von oben auf die Mantelfläche der Tube aufgesetzt und dann aktiviert, wodurch die Tube angesaugt und gehalten wird. Anschließend dreht das 1. Armglied des mehrgliedrigen Gelenkarms, wodurch die Tube vom Bereitstellungsplatz abgehoben und zum Ablageplatz transportiert wird. Während dieser Transportbewegung wird das Halteglied relativ zu dem 1. Armglied geschwenkt, so dass die Tube am Ablageplatz gegen eine vertikale Lagerfläche gelegt oder gespannt werden kann.

Wenn der in der Tubenfüllmaschine vorhandene Bauraum für eine derart einfache Schwenkbewegung nicht ausreicht, kann es notwendig sein, zwischen dem 1. Armglied und dem Halteglied zumindest ein 2. Gelenkglied gelenkig gelagert anzuordnen. Durch die relative Verstellung zwischen dem 1. Armglied, dem 2. Armglied und dem Halteglied lassen sich auch relativ komplizierte Kurven für die Transportbewegung der Tube erreichen.

Die Haltevorrichtung des Haltegliedes, mit der die Tube aufgenommen wird, kann in bevorzugter Ausgestaltung der Erfindung von zumindest zwei insbesondere in Längsrichtung der Tube auf Abstand angeordneten Sauger gebildet sein.

Die Umsetzvorrichtung kann vom Ablageplatz erst dann zu dem Bereitstellungsplatz zurückkehren und dort eine weitere Tube aufnehmen, wenn die transportierte Tube am Ablageplatz sicher positioniert ist. Zu diesem Zweck kann an dem Ablageplatz eine Saugvorrichtung ausgebildet sein, mittels der die Tube auf dem Ablageplatz fixierbar ist.

In einer einfachen Ausgestaltung der Umsetzvorrichtung werden die Tuben einzeln zwischen dem Bereitstellungsplatz und dem Ablageplatz umgesetzt. Es ist jedoch auch möglich, in einem einzigen Bewegungszyklus 2, 3 oder mehr Tuben gleichzeitig umzusetzen. Zu diesem Zweck kann vorgesehen sein, dass die Umsetzvorrichtung mehrere Halteglieder aufweist, die jeweils eine Haltevorrichtung zur Aufnahme einer Tube tragen. Die Halteglieder sind vorzugsweise alle am gleichen Armglied schwenkbar gelagert und können parallel ausgerichtet sein. Dabei ist insbesondere vorgesehen, dass die Halteglieder in ihrer Bewegung relativ zu dem 1. Armglied synchronisiert sind.

Weitere Einzelheiten und Merkmale der Erfindung sind aus der folgenden Beschreibung von Ausführungsbeispielen unter Bezugnahme auf die Zeichnung ersichtlich. Es zeigen:
- Fig. 1: Eine schematische Ansicht einer erfindungsgemäßen Umsetzvorrichtung bei der Aufnahme einer Tube,
- Fig. 2: die Umsetzvorrichtung gemäß Figur 1 während einer 1. Phase des Umsetzens der Tube,
- Fig. 3: die Umsetzvorrichtung gemäß Figur 1 während einer 2. Phase des Umsetzens der Tube,
- Fig. 4: die Umsetzvorrichtung gemäß Figur 1 bei der Abgabe der Tube,
- Fig. 5: eine 1. alternative Ausgestaltung der Umsetzvorrichtung gemäß Figur 1,
- Fig. 6: eine 2. alternative Ausgestaltung der Umsetzvorrichtung gemäß Figur 1,
- Fig. 7: ein 2. Ausführungsbeispiel einer erfindungsgemäßen Umsetzvorrichtung bei Aufnahme einer Tube,
- Fig. 8: die Umsetzvorrichtung gemäß Figur 7 in einer 1. Phase der Umsetzbewegung der Tube,
- Fig. 9: die Umsetzvorrichtung gemäß Figur 8 in einer 2. Phase der Umsetzbewegung der Tube,
- Fig. 10: die Umsetzvorrichtung gemäß Figur 7 bei Abgabe der Tube,
- Fig. 11: eine 1. alternative Ausgestaltung der Umsetzvorrichtung gemäß Figur 7 und
- Fig. 12: eine 2. alternative Ausgestaltung der Umsetzvorrichtung gemäß Figur 7.

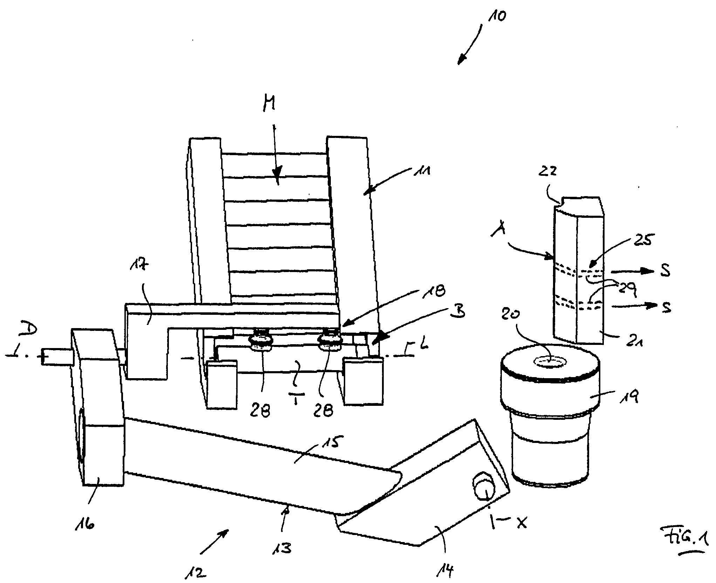

Eine in Figur 1 dargestellte Umsetzvorrichtung 10 dient zum Umsetzen einer Tube T in einer Tubenfüllmaschine zwischen einem Bereitstellungsplatz B und einem Ablageplatz A. Die Tuben T werden in einer endlosen Reihe in Querlage zu der Transportrichtung M in einem schräg angeordneten Führungskanal 11 zugeführt, an dessen unterem Ende der Bereitstellungsplatz B ausgebildet ist, auf dem die 1. Tube T der Tubenreihe liegt. Die Umsetzvorrichtung 10 umfasst einen Gelenkarm 12, der ein 1. Armglied 13 aufweist, das an seinem gemäß Figur 1 rechten, unteren Ende schwenkbar um eine Drehachse X gelagert ist. Im dargestellten Ausführungsbeispiel umfasst das 1. Armglied 13 ein Basisteil 14, ein Verbindungsteil 15 und ein Kopfteil 16, die fest miteinander verbunden sind. Die Drehachse X ist an dem Basisteil 14 ausgebildet. Am entgegengesetzten Ende des 1. Armglieds 13, d.h. am Kopfteil 16 ist ein bügelartiges Halteglied 17 angelenkt, das um eine Achse D relativ zum Kopfteil 16 schwenkbar ist. Die Achse D verläuft senkrecht zur Drehachse X.

An dem Halteglied 17 ist eine Haltevorrichtung 18 in Form von zwei auf Abstand angeordneten Saugern 28 gelagert, die in nicht dargestellter Weise mit einem Unterdruck beaufschlagbar sind.

Der Ablageplatz A ist an einem vertikal ausgerichteten Lagerblock 21 vorgesehen, der eine vertikale Lagerfläche 22 besitzt. In den Lagerblock 21 ist eine Saugvorrichtung 25 integriert, die interne Saugkanäle 25 umfasst, die auf der Lagerfläche 22 münden und mit einem Unterdruck beaufschlagbar sind, wie es durch die Pfeile S angedeutet ist.

Unterhalb des Ablageplatzes A ist ein Tubenhalter 19 angeordnet, der in üblicher Weise auf seiner Oberseite ein Einsetzloch 20 für die Tube T aufweist.

Im Folgenden wird anhand der Figuren 1, 2, 3 und 4 das Umsetzen einer T in einzelnen Phasen erläutert. In dem in Figur 1 dargestellten Ausgangszustand liegt die umzusetzende Tube T in horizontaler Ausrichtung auf dem Bereitstellungsplatz B. Der Gelenkarm 12 wird so eingestellt, dass sich das Halteglied 17 mit den Saugern 28 unmittelbar oberhalb der Tube T befindet und die Sauger 28 mit deren Mantelfläche auf der Oberseite der Tube in Anlage kommen. Die Tube T ist dabei so ausgerichtet, dass ihre Längsachse L entweder mit der Achse D, um die das Haltglied 17 schwenkt, zusammenfällt oder parallel zu dieser verläuft. Die Sauger 28 sind in Längsrichtung der Tube T voneinander beabstandet.

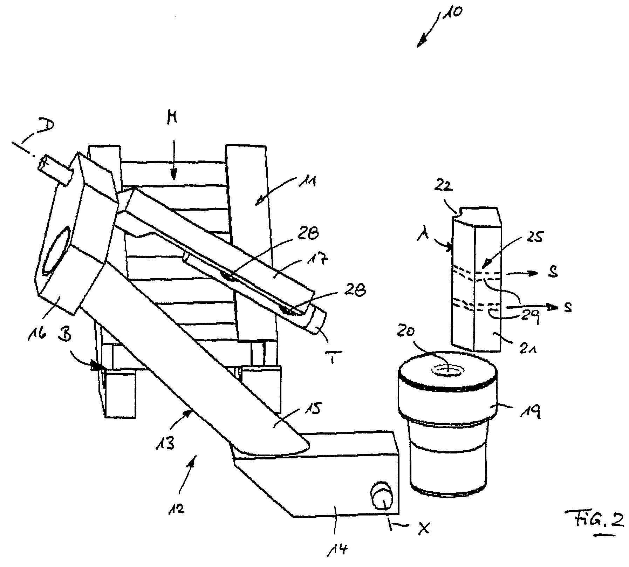

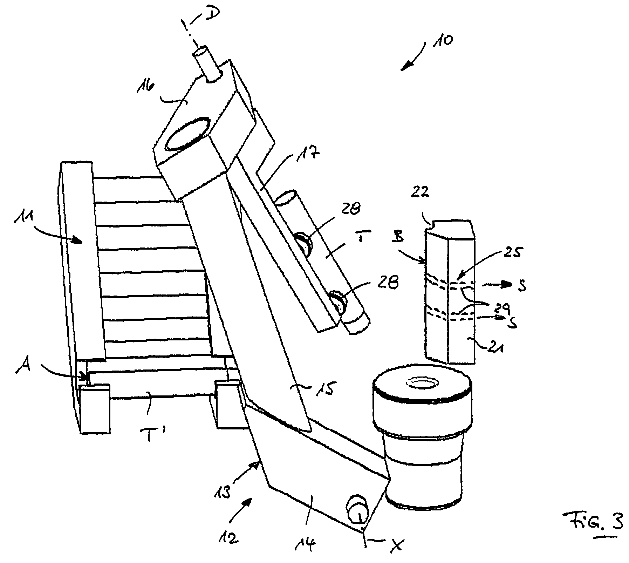

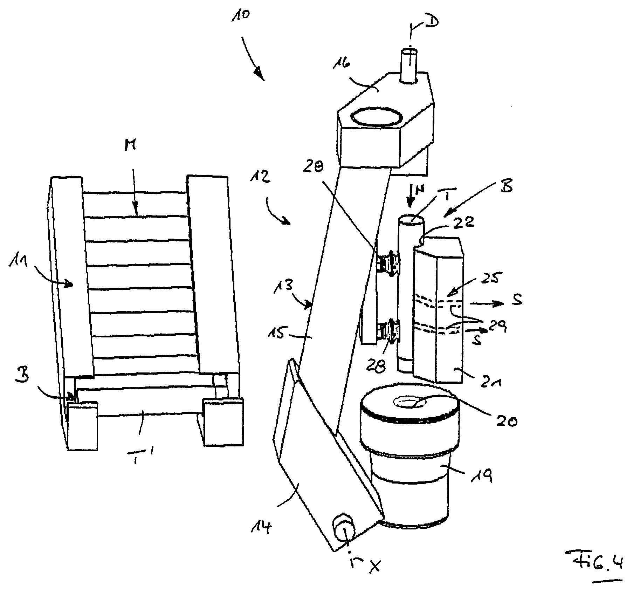

Wenn die Sauger 28 mit einem Unterdruck beaufschlagt werden, nehmen die Sauger 28 die Tube T auf. Anschließend wird der Gelenkarm 12 um die Achse X geschwenkt, wobei gleichzeitig eine Schwenkung des Halteglieds 17 um die Achse D erfolgt. Eine 1. Phase dieser Bewegung ist in Figur 2 dargestellt. Bei weiterer Schwenkung des Gelenkarms 12 um die Achse X sowie Drehung des Halteglieds 17 und damit der Tube T um die Achse D wird die Tube T dem Ablageplatz A angenähert (Fig. 3). Dabei wird die Tube T so ausgerichtet, dass sie von dem Gelenkarm 12 gegen die vertikale Lagerfläche 22 des Lagerblocks 21 angelegt wird. Diese Stellung ist in Figur 4 dargestellt. Da die Saugkanäle 29 mit Unterdruck beaufschlagt sind, wird die Tube T auf der Lagerfläche 22 gehalten. Die Sauger 28 können dann die Tube T freigeben und zu dem Bereitstellungsplatz B zurückkehren, an dem bereits die nächste Tube T' zur Aufnahme bereit liegt.

Auf die am Ablageplatz A gehaltene Tube T wird dann von oben in nicht näher dargestellter Weise eine Einschubkraft N aufgebracht, durch die die Tube T von oben in das Einsetzloch 20 des Tubenhalters 19 eingeführt wird.

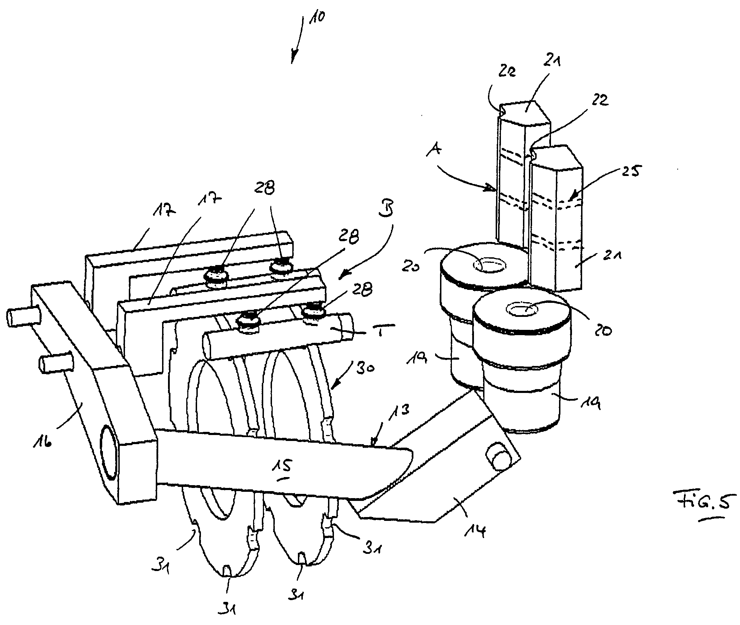

Bei dem in den Figuren 1 bis 4 dargestellten Ausführungsbeispiel werden die Tuben jeweils einzeln und nacheinander umgesetzt. Figur 5 zeigt eine Ausgestaltung, bei der zwei Tuben T gleichzeitig umgesetzt werden. Zu diesem Zweck sind am Kopfteil 16 des 1. Armglieds 13 zwei gleichartig aufgebaute Halteglieder 17 angeordnet, die jeweils zwei Sauger 28 in der genannten Anordnung und Ausrichtung tragen und die jeweils um eine Drehachse schwenkbar sind. Am Ablageplatz A sind dementsprechend zwei Lagerblöcke 21 mit jeweils einer Lagerfläche 22 und zwei Tubenhalter 19 vorgesehen.

Die Zuführung der Tuben erfolgt hierbei über ein Scheibenpaar 30, wobei jede Scheibe über den Umfang verteilt mehrere Ausnehmungen 31 besitzt. Mittels dieser an sich bekannten Fördervorrichtung ist es möglich, zwei Tuben T in paralleler Ausrichtung und in gegenseitigem Abstand quer zu ihrer Längsachse am Bereitstellungsplatz B bereitzustellen, so dass die Tuben T gleichzeitig von den beiden Haltegliedern 17 bzw. den daran gelagerten Saugern 28 aufgenommen werden.

Die weitere Umsetzbewegung der Tuben T zum Ablageplatz A erfolgt in bereits erläuterter Weise.

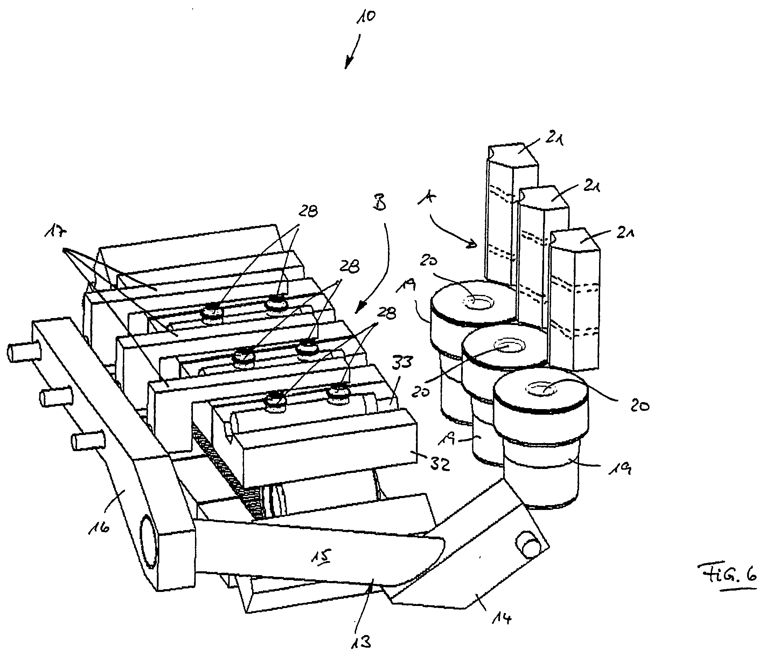

Figur 6 zeigt ein Ausführungsbeispiel, bei dem gleichzeitig drei Tuben aufgenommen werden. Entsprechend sind drei parallel ausgebildete Halteglieder 17 am Kopfteil 16 drehbar gelagert und am Ablageplatz A sind drei Lagerblöcke 21 und drei Tubenhalter 19 vorgesehen. Bei dieser Ausgestaltung werden die Tuben mittels eines umlaufenden EndlosFörderers zugestellt, der mehrere hintereinander angeordnete Lagerteile 32 besitzt, die jeweils eine Nut 33 aufweisen, in die eine Tube eingelegt werden kann. Auf diese Weise ist es möglich, die Tuben am Bereitstellungsplatz B in paralleler Ausrichtung und in gegenseitigem Abstand zuzuführen und bereitzustellen. Die weitere Umsetzung der Tuben T erfolgt in bereits genannter Weise.

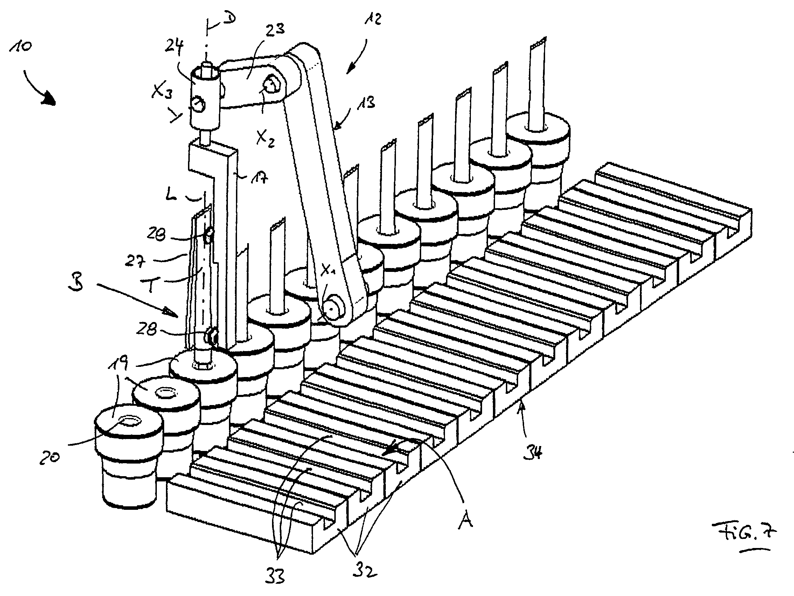

Bei den bisherigen Ausführungsbeispielen war die Tube am Bereitstellungsplatz B in horizontaler Ausrichtung aufgenommen und am Ablageplatz A in vertikaler Ausrichtung abgegeben worden. Figur 7 zeigt eine nicht erfindungsgemässe Ausgestaltung, bei der die umzusetzende Tube T am Bereitstellungsplatz B in vertikaler Ausrichtung vorliegt.

Die umzusetzenden Tuben T werden bei der Umsetzvorrichtung 10 gemäß Figur 7 in endloser Reihe in Tubenhaltern 19 zugeführt, in deren oberem Einsetzloch 20 jeweils eine Tube T in vertikaler Ausrichtung aufgenommen ist.

Der Gelenkarm 12 besitzt ein 1. Armglied 13, das um eine Drehachse X1 schwenkbar ist, die am unteren Ende des 1. Armglieds 13 ausgebildet ist. Am entgegengesetzten oberen Ende ist das 1. Armglied 13 gelenkig mit einem 2. Armglied verbunden, wobei das 2. Armglied 23 relativ zum 1. Armglied 13 um eine Drehachse X2 drehbar ist, die parallel zur Drehachse X1 verläuft.

Das 2. Armglied 23 ist gelenkig mit einem Hülsenteil 24 verbunden, das über eine Drehachse X3 relativ zum 2. Armglied 23 schwenkbar ist. Die Drehachse X3 verläuft parallel zu den Drehachsen X1 und X2.

In dem Hülsenteil 24 ist ein bügelartiges Halteglied 17 um eine Achse D drehbar gelagert, die senkrecht zur Drehachse X3 verläuft. Das Halteglied 17 besitzt eine Haltevorrichtung 18 mit zwei Saugern 28, die voneinander beabstandet sind.

Der Ablageplatz A ist von einem Förderband 34 gebildet, das eine Vielzahl von nebeneinander angeordneten Lagerteilen 32 besitzt, auf deren Oberseite jeweils eine Aufnahme ausgebildet ist, in die jeweils eine Tube eingelegt werden kann. Im dargestellten Ausführungsbeispiel sind die Aufnahmen von Nuten 23 gebildet, jedoch können dazu auch vertikale Trennwände oder -stege vorgesehen sein.

Im Folgenden wird das Umsetzen einer Tube anhand der Figuren 7 bis 10 in einzelnen Phasen erläutert.

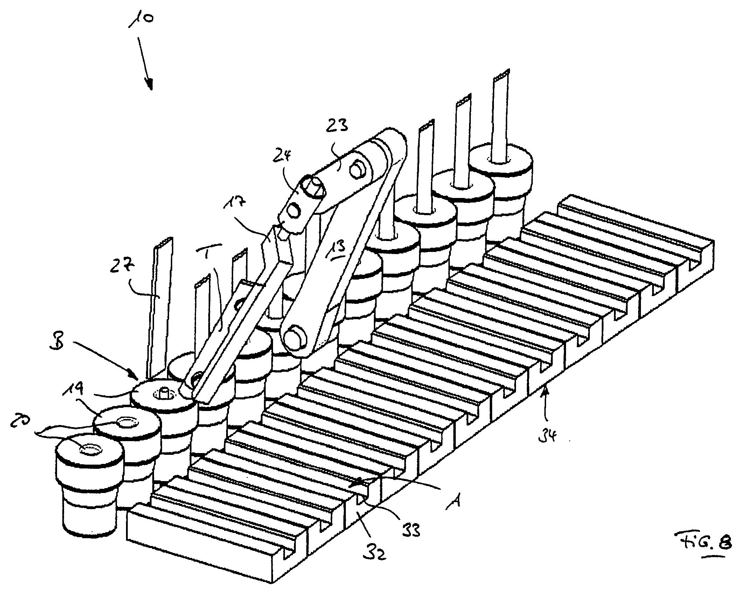

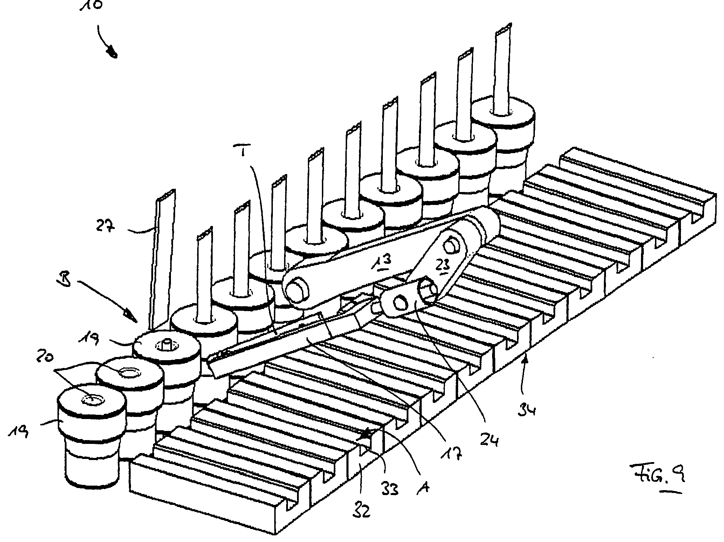

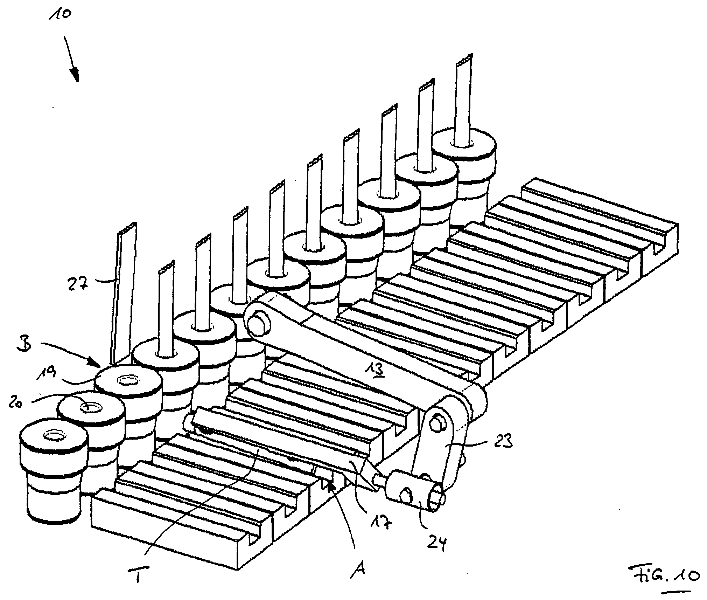

Der Gelenkarm 12 wird zunächst so verstellt, dass die Sauger 28 mit der Mantelfläche der Tube T, die sich noch im Tubenhalter 19 befindet, in Anlage kommen. Auf der den Saugern 28 abgewandten Seite der Tube T ist eine Anlagefläche 27 vorgesehen, die verhindert, dass die Tube T beim Ergreifen nach hinten ausweicht. Durch Aktivierung der Sauger 28 wird die Tube T ergriffen. Gleichzeitig oder unmittelbar vorher wird die Tube aus dem Tubenhalter 19 herausgehoben (Fig. 7) und der Gelenkarm 12 wird so angesteuert, dass die Tube T zum Ablageplatz A transportiert wird (Fig. 8 und 9). Dabei wird das Halteglied 17 um die Achse D gedreht, die entweder mit der Längsachse L der Tube zusammenfällt oder parallel zu dieser verläuft. Auf diese Weise ist es möglich, die Tube T so auszurichten, dass sie im Bereich des Ablageplatzes A von oben in eine der Nuten 33 der Fördervorrichtung 34 eingelegt wird, wie es in Figur 10 dargestellt ist. Die Tube T kann dabei so um ihre Längsachse gedreht sein, dass die hintere Verschluss- oder Falzkante der Tube T diagonal in der Nut 33 liegt und somit für das spätere Einschieben in eine Faltschachtel bereits korrekt ausgerichtet ist.

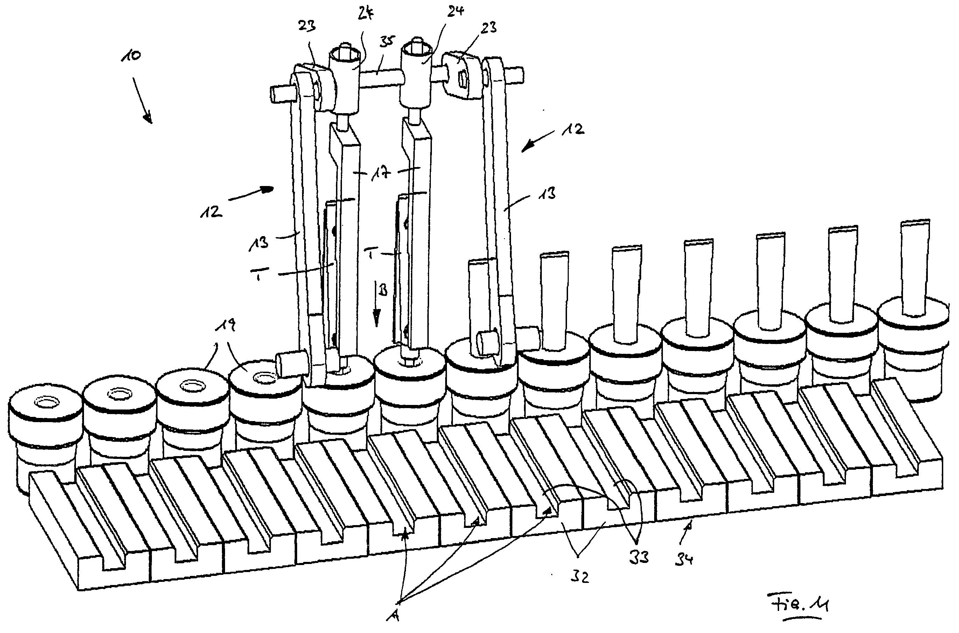

Die nicht erfindungsgemässe Ausführungsform der Umsetzvorrichtung gemäß Figur 11 unterscheidet sich von der Umsetzvorrichtung gemäß Figur 7 lediglich dadurch, dass zwei Gelenkarme 12 gleichartigen Aufbaus vorgesehen sind, die jeweils ein rahmenartiges Halteglied 17 mit zwei Saugern 28 aufweisen. Die beiden Gelenkarme 12 sind über eine Verbindungsstange 35 miteinander verbunden und gekoppelt, so dass die Halteglieder 17 zusammen verstellt werden. Auf diese Weise ist es möglich, gleichzeitig zwei Tuben T am Bereitstellungsplatz B aus jeweils einem Tubenhalter 19 zu entnehmen und am Ablageplatz A in jeweils eine Nut 33 des Förderbandes 34 einzulegen.

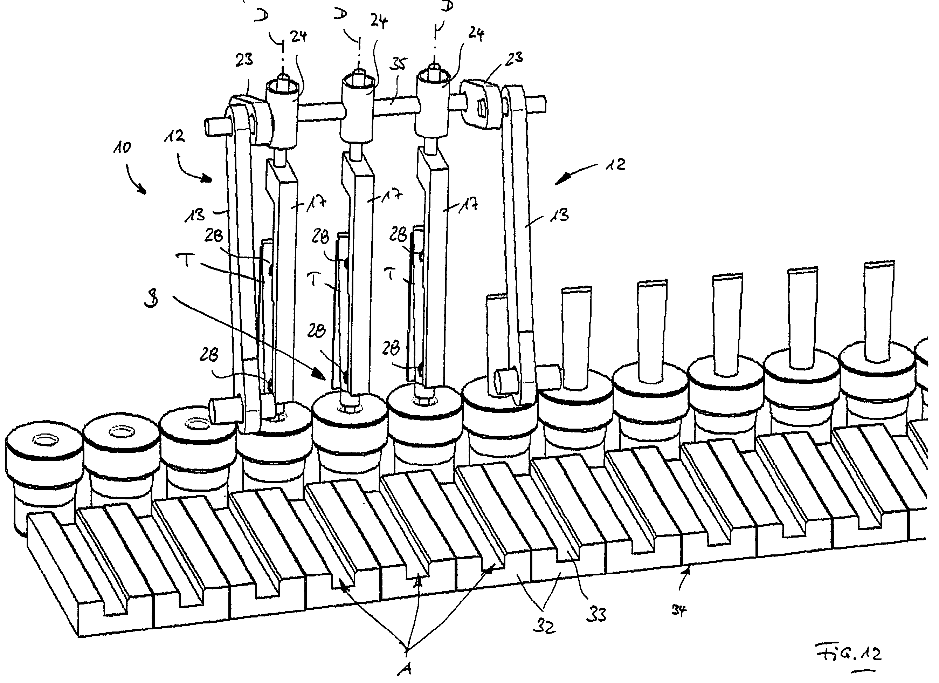

Eine Weiterbildung dieser nicht erfindungsgemässen Ausgestaltung zeigt Figur 12, wobei nunmehr an der Verbindungsstange 35 drei parallel ausgerichtete Halteglieder 17 mit jeweils zwei Saugern 28 vorgesehen sind. Aufgrund der Verbindung der Gelenkarme 12 über die Verbindungsstange 35 werden die Gelenkarme 12 gemeinsam verschwenkt, wobei die Halteglieder 17 in ihrer Drehbewegung um die jeweilige Achse D synchronisiert sind. Auf diese Weise ist es möglich, gleichzeitig drei Tuben am Bereitstellungsplatz aufzunehmen und am Ablageplatz abzulegen.

Mit den in den Figuren 11 und 12 gezeigten nicht erfindungsgemässen Ausgestaltungen ist es möglich, den gegenseitigen Abstand der Tuben während des Umsetzens zu verändern. Dies ist erforderlich, wenn der gegenseitige Abstand der Tuben in den aufeinanderfolgenden Tubenhaltern und der gegenseitige Abstand der Tuben in der weiterführenden Fördervorrichtung 34 unterschiedlich ist. Die Abstandsänderung lässt sich dadurch erreichen, dass die Tuben nicht um ihre Längsachse L, sondern um die dazu versetzte parallele Achse D gedreht werden.

## Patentansprüche

1. Verfahren zum Umsetzen einer Tube (T) in einer Tubenfüllmaschine zwischen einem Bereitstellungsplatz (B) und einem Ablageplatz (A) mittels eines mehrgliedrigen Gelenkarms (12), der zumindest ein 1. Armglied (13), das um eine Drehachse (x) schwenkbar ist, und ein Halteglied (17) aufweist, das an dem 1. Armglied (13) mittelbar oder unmittelbar schwenkbar gelagert ist und das zumindest eine Haltevorrichtung (18) trägt, wobei die Tube (T) in einer horizontalen Ausrichtung auf dem Bereitstellungsplatz (B) mittels der Haltevorrichtung (18) an ihrer Mantelfläche ergriffen und mittels einer Schwenkung des Gelenkarms (12) zum Ablageplatz (A) transportiert und dort in einer vertikalen Ausrichtung abgegeben wird, **dadurch gekennzeichnet, dass** die Tube (T) auf dem Transport zwischen dem Bereitstellungsplatz (B) und dem Ablageplatz (A) sowohl zusammen mit dem Gelenkarm (12) um die Drehachse (X) geschwenkt als auch durch Schwenkung des Halteglieds (17) relativ zum 1. Armglied (13) um ihre Längsachse (L) oder eine parallel dazu verlaufende Achse (D) gedreht wird.

2. Verfahren nach Anspruch 1, **dadurch gekennzeichnet, dass** die Tube (T) mittels der Haltevorrichtung (18) an zumindest zwei in Längsrichtung der Tube (T) beabstandeten Bereichen ergriffen wird.

3. Verfahren nach Anspruch 1, **dadurch gekennzeichnet, dass** die Schwenkung um die Drehachse (X) um ca. 90° erfolgt.

4. Verfahren nach Anspruch 1 oder 3, **dadurch gekennzeichnet, dass** die Drehachse (X) senkrecht zur Längsachse (L) der Tube (T) oder zu der dazu parallelen Achse (D) verläuft.

5. Verfahren nach einem der Ansprüche 1 bis 4, **dadurch gekennzeichnet, dass** die Haltevorrichtung (18) auf dem Bereitstellungsplatz (B) auf die Tube (T) auf deren Oberseite einwirkt.

6. Verfahren nach einem der Ansprüche 1 bis 5, **dadurch gekennzeichnet, dass** die Tube (T) auf dem Ablageplatz (A) mittels einer Saugvorrichtung (25) gehalten ist.

7. Verfahren nach einem der Ansprüche 1 bis 6, **dadurch gekennzeichnet, dass** die Tube (T) auf dem Ablageplatz (A) oberhalb eines Tubenhalters (19) gehalten ist und von oben in den Tubenhalter (19) eingeschoben wird.

## Claims

1. Method for transferring a tube (T) in a tube filling machine between a provision location (B) and a deposition location (A) by means of a multimember articulated arm (12) which has at least one first arm member (13), which is pivotable about a rotation axis (X), and a holding member (17), which is mounted on the first arm member (13) so as to be indirectly or directly pivotable and carries at least one holding device (18), wherein the tube (T) is grasped at its lateral surface, in a horizontal orientation at the provision location (B), by means of the holding apparatus (18) and is transported to the deposition location (A) by means of the articulated arm (12) being pivoted and is deposited there in a vertical orientation, **characterized in that**, while being transported between the provision location (B) and the deposition location (A), the tube (T) is both pivoted about the rotation axis (X) together with the articulated arm (12) and is rotated about its longitudinal axis (L) or an axis (D) extending parallel thereto, by pivoting of the holding member (17) relative to the first arm member (13).

2. Method according to Claim 1, **characterized in that** the tube (T) is grasped by means of the holding device (18) in at least two regions that are spaced apart in the longitudinal direction of the tube (T).

3. Method according to Claim 1, **characterized in that** the pivoting about the rotation axis (X) takes place through about 90°.

4. Method according to Claim 1 or 3, **characterized in that** the rotation axis (X) extends perpendicularly to the longitudinal axis (L) of the tube (T) or to the axis (D) parallel thereto.

5. Method according to one of Claims 1 to 4, **characterized in that** the holding device (18) acts on the top side of the tube (T) at the provision location (B).

6. Method according to one of Claims 1 to 5, **characterized in that** the tube (T) is held at the deposition location (A) by means of a suction device (25).

7. Method according to one of Claims 1 to 6, **characterized in that** the tube (T) is held above a tube holder (19) at the deposition location (A) and is pushed into the tube holder (19) from above.

## Revendications

1. Procede de deplacement d'un tube (T) dans une machine de remplissage de tube entre une place de mise à disposition (B) et une place de rangement (A) à l'aide d'un bras articulé (12) à plusieurs maillons comportant au moins un 1^{er} maillon de bras (13) pouvant pivoter autour d'un axe de rotation (x) et un maillon de maintien (17) dispose de façon à pouvoir pivoter directement ou indirectement au niveau du 1^{er} maillon de bras (13) et supportant l'au moins un dispositif de maintien (18), le tube (T) étant saisi dans une orientation horizontale sur la place de mise à disposition (B) à l'aide du dispositif de maintien (18), au niveau de sa surface d'enveloppe, et étant transporte par pivotement du bras articulé (12) jusqu'à la place de rangement (A) et y étant déposé dans une orientation verticale, **caracterisé en ce que** le tube (T) est pivoté lors du transport entre la place de mise à disposition (B) et la place de rangement (A) tant conjointement avec le bras articulé (12) autour de l'axe de rotation (X) que par pivotement du maillon de maintien (17) par rapport au 1^{er} maillon de bras (13) autour de son axe longitudinal (L) ou un axe (D) s'étendant parallelement à lui.

2. Procede selon la revendication 1, **caracterisé en ce que** le tube (T) est saisi à l'aide du dispositif de maintien (18) au niveau d'au moins deux zones espacées dans la direction longitudinale du tube (T).

3. Procede selon la revendication 1, **caracterisé en ce que** le pivotement autour de l'axe de rotation (X) se produit sur environ 90°.

4. Procede selon la revendication 1 ou 3, **caracterisé en ce que** l'axe de rotation (X) s'étend perpendiculairement à l'axe longitudinal (L) du tube (T) ou à l'axe (D) parallele à lui.

5. Procede selon l'une quelconque des revendications 1 à 4, **caracterisé en ce que** le dispositif de maintien (18) agit sur la place de mise à disposition (B), sur le tube (T), sur son côté supérieur.

6. Procede selon l'une quelconque des revendications 1 à 5, **caracterisé en ce que** le tube (T) est maintenu sur la place de rangement (A) à l'aide d'un dispositif d'aspiration (25).

7. Procede selon l'une quelconque des revendications 1 à 6, **caracterisé en ce que** le tube (T) est maintenu sur la place de rangement (A) au-dessus d'un support de tube (19) et inséré par en haut dans le support de tube (19).
